# EUROPEAN PATENT SPECIFICATION

(11) **EP 2 107 866 B1**
(45) Date of publication and mention of the grant of the patent: **13.06.2012**
(21) Application number: 07849721.1
(22) Date of filing: 29.10.2007
(51) Int. Cl.: A01D 34/416

(54) **LINE TYPE GRASS-CUTTING HEAD**
FADENGRASSCHNEIDKOPF
TÊTE DE COUPE D'HERBE DE TYPE À LIGNE

(30) Priority: 03.11.2006 IT FI20060275
(43) Date of publication of application: 14.10.2009
(73) Proprietor: Arnetoli, Fabrizio, 50066 Reggello (IT)
(72) Inventor: Arnetoli, Fabrizio, 50066 Reggello (IT)
(74) Representative: Mannucci, Michele
(86) International application number: PCT/IT2007/000752
(87) International publication number: WO 2008/053508

(56) References cited:
- EP-A- 0 315 603
- WO-A-01/10188
- WO-A-2006/036455
- FR-A- 2 625 865
- US-A- 5 743 019

## Description

### Technical field

The present invention relates to a grass cutting head and more in particular to a line-type grass cutting head, i.e. a head in which a line is wound on a spool inside a housing of the head, the ends of the line projecting from the head to perform cutting of the vegetation when the head is rotated.

### State of the Art

For gardening jobs at both amateur and professional level, grass cutting heads are commonly used to cut grass and other vegetation; these heads are provided with cutting lines projecting radially from a main body of the head and, due to centrifugal force exerted thereon and to rapid rotation of the head about the axis thereof, cut the vegetation.

Examples of line heads of this type are described in the following United States patents: US 4,097,991, US 4,104,797, US 4,145,809, US 4,161,820, US 4,259,782, US 4,203,212, US 4,274,201, US 4,651,421, US 4,738,085, US 4805306, US 4,813,140, US 4,823,465, US 4,882,843, US 4,893,410, US 4,942,664, US 4,959,904, US 4,989,321, US 5,010,649, US 5,526,572, US 6,095,688, US 5,136,782, US 5,295,306, US 5,490,641, US 5,657,542, US 6,141,879, US 6,163,964, US 6,851,191, US 5 743 019, and in WO-A-2006/036 455.

During use of said type of head, the cutting line projecting from the head becomes worn and breaks, and consequently it must be unwound from the spool as required.

Systems to lengthen the cutting line are known, in which the spool on which the line is wound presents a toothing cooperating with a double toothing provided in the housing of the spool itself. The toothings are offset axially and angularly, so that an alternate axial movement of the spool inside the housing thereof causes a stepped rotation of the spool with respect to the housing and, consequently, gradual unwinding of the line. Examples of mechanisms of this type are described in GB-A-2078075, EP-0203011, US-4183138, and US-4274201.

WO-A-0149101 instead describes a spool which comprises a lengthening mechanism with an elastic slider provided with a toothing cooperating with two series of axially and angularly offset teeth inside the sliding seat of the slider in the central part of the spool.

EP-A-0970596 describes a grass cutting head with a spool provided with a toothing cooperating with two offset series of teeth, provided inside the housing of the head. The head is structured so that, besides stepped rotation of the spool in the direction to unwind the cutting line, it is also possible to rotate the spool in the direction to wind the cutting line without removing the head and consequently without removing the spool therefrom. This allows the cutting line to be reloaded in the head without having to remove the latter.

In the majority of cutting heads described above the housing of the spool of cutting line consists of two portions coupled to each other by a snap elastic system. Typically, these snap coupling mechanisms comprise elastic tabs on one of the two portions of the housing, which penetrate slots obtained on the other of the two portions so that, once assembled, the two portions of the housing are arranged in a specific and fixed reciprocal angular position.

### Object and summary of the invention

An object of the invention is to provide a grass cutting head with a simple coupling mechanism for coupling the portions forming the housing for the cutting line, and which at the same time allows the spool inside the head to rotate easily in one or the other direction to unwind/wind the line.

Further objects and advantages of the invention will be apparent to those skilled in the art from reading the appended claims, which define the scope of the invention.

In substance, the grass cutting head comprises a housing, inside which at least one cutting line wound on at least one spool can be disposed. The housing comprises a first portion and a second portion coupled reversibly to each other by means of a snap coupling. Said snap coupling is designed to allow at least one reciprocal angular movement between the first portion and the second portion of the housing around the axis of rotation of the grass cutting head. The two portions of the housing are movable angularly so that they can rotate by any angle with respect to each other.

According to a particularly advantageous embodiment of the invention, the snap coupling is designed also to allow a reciprocal axial movement between this first and second portions of the housing.

In a preferred embodiment of the invention, the snap coupling is produced by providing, on one of the two portions of the housing, elastic tabs engaging in undercuts of the other portion of the housing.

According to a possible embodiment, to allow an unlimited reciprocal angular movement between the two portions of the housing, the tabs integral with one of the two portions forming the housing engage in an undercut produced in the form of a continuous angular projection, extending from a perimeter wall of the other of the two portions forming the housing.

In an advantageous embodiment, one of the portions forming the housing can be torsionally coupled to a rotation mechanism for rotating the spool.

In a preferred embodiment of the invention, the head comprises a spool separated by the two portions forming the housing of the cutting line. This spool is arranged entirely between the two portions of housing. This allows simpler pieces to be produced with less complex molds. However, it would also be possible for the spool to be an integral part of the housing of the cutting line. For example, the spool can have one of the flanges defining the winding seat of the cutting line, which extends to form a closing cover of the housing inside which the coil or coils of cutting line are placed.

Further possible and advantageous features and embodiments of the invention are described below with reference to two embodiments and are set forth in the appended claims.

In some embodiments, the spool for the cutting line has an axial seat in which a slider is housed, elastically stressed toward a position in which it projects from said seat; said slider acting on members of the spool which allow a stepped rotation of the slider with respect to the spool.

In some embodiments said slider has a toothing cooperating alternatively with a first series of teeth and a second series of teeth integral with said spool and the teeth of the first and of the second series are angularly and axially offset, an alternate axial sliding movement of the slider in the seat of the spool allowing a stepped rotation of the spool with respect to the slider. Preferably, the slider is torsionally coupled to one of said first and second portions of the housing. Moreover, said portion of the housing torsionally coupled to the slider can have a through hole, through which the slider projects on the outside of the housing of the spool. In some embodiments, said slider comprises at least two components torsionally coupled to each other, one of which projects from said housing. The through hole preferably has a non-circular cross section, with a profile that couples torsionally with a profile of the cross section of the slider.

Said portion of the housing torsionally coupled to the slider can have a continuous bottom wall, inside which a torsional coupling for said slider is provided. Said torsional coupling can comprise a shank projecting from said bottom wall toward the inside of the housing, the shank having a cross section with a profile for torsional coupling to a corresponding profile of the cross section of a hole of the slider inside which said shank engages.

In some embodiments the slider is held in the seat of the spool by means of an annular member fastened to the spool, one of the first and second series of angularly and axially offset teeth of the spool being formed on said annular member. Said annular member can have a plurality of elastic tabs for fastening to the spool. In some preferred embodiments, the slider is held by said annular member as a result of the toothing of the slider, which projects radially from the slider and interferes with the annular member.

The toothing of the slider and/or one of said first and second series of teeth of the spool can be shaped so as to allow rotation of the slider in one direction but not in the opposite direction with respect to the spool as a result of a torque applied from the outside.

The toothing of the slider can include teeth chamfered on one side, so that an angular thrust exerted by the teeth of one of said first and second series of teeth of the spool, generated by a rotation torque in one direction applied to the slider from the outside, causes an axial thrust on the slider and release of the slider from said teeth, so that the slider can rotate with respect to the spool in said direction, while a rotation of the slider in the opposite direction with respect to the spool is prevented by cooperation of said toothing of the spool with the teeth of the slider, reciprocal stepped rotation between slider and spool in said opposite direction being allowed by sliding said slider axially in said seat.

### Brief description of the drawings

The invention will be better understood by following the description and accompanying drawing, which shows examples of non-limiting practical embodiments of the invention. More in particular, in the drawing:
Figs. 1 and 2 show an exploded view from two different angles of a head according to the invention in a first embodiment;
Fig. 3 shows a plan view of the head in figs. 1 and 2;
Figs. 4 and 5 shows diametrical sections according to IV-IV and V-V of Fig. 3;
Fig. 6 shows a perspective view of the head in figs. 1 to 5;
Fig. 6A shows an exploded view of the spool;
Fig. 6B shows an axonometric view of the mounted spool;
Figs. 7 and 8 show exploded views of a second embodiment of the head according to the invention;
Fig. 9 shows a plan view of the head in figs. 7 and 8;
Figs. 10 and 11 show two diametrical sections according to X-X and XI-XI of Fig. 9;
Fig. 12 shows a perspective view of the head in figs. 7 to 11;
Figs. 13 and 14 show two exploded views according to two different angles of the line winding spool of the head in figs. 7 to 12; and
Fig. 15 shows a further embodiment of the invention

### Detailed description of embodiments of the invention

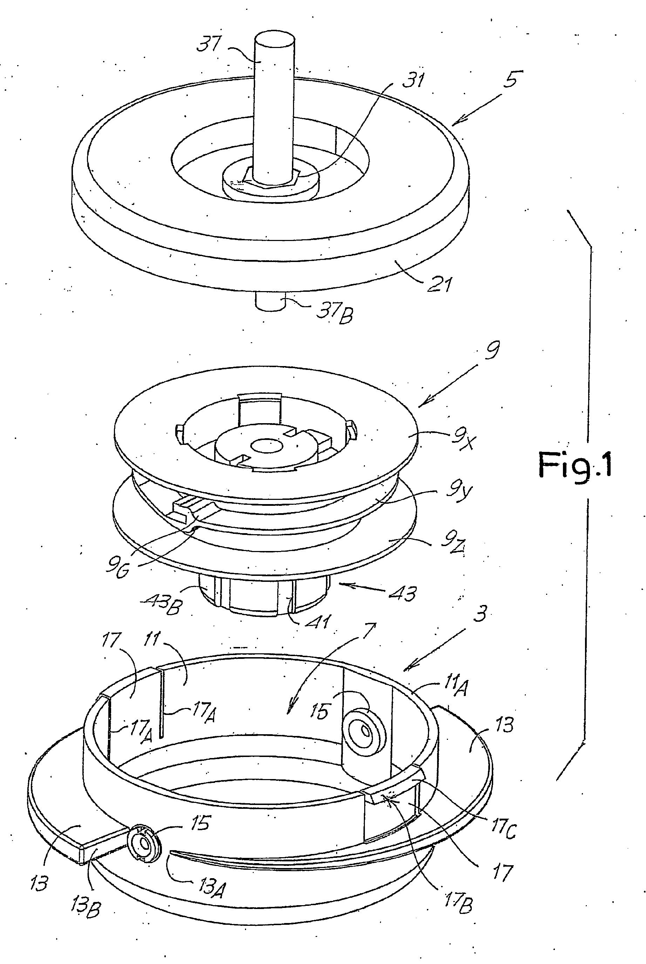

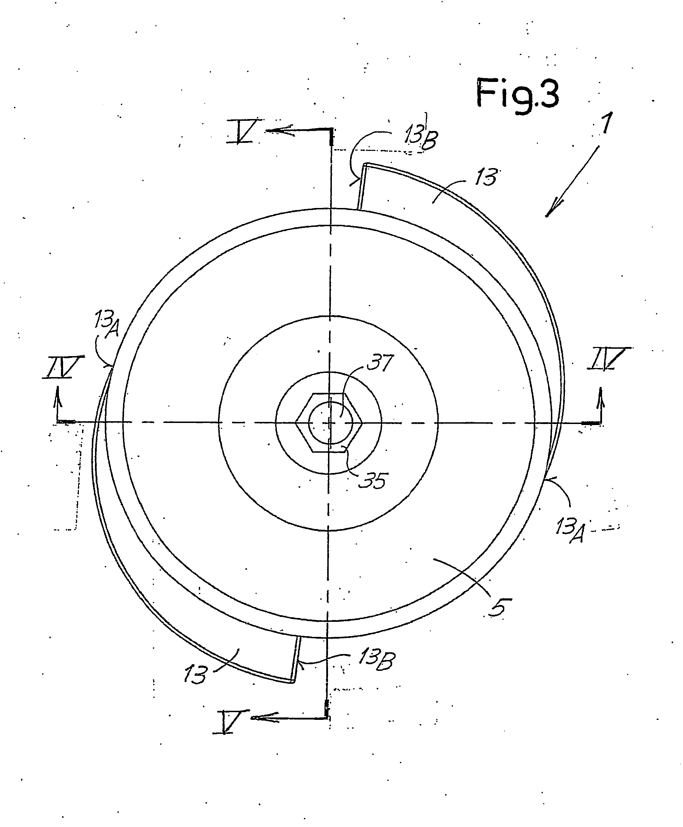

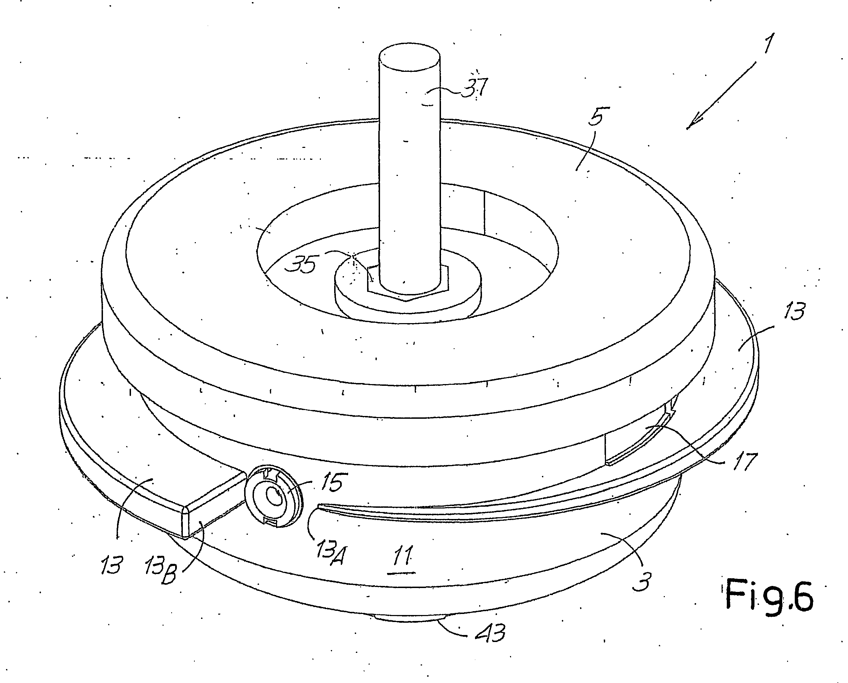

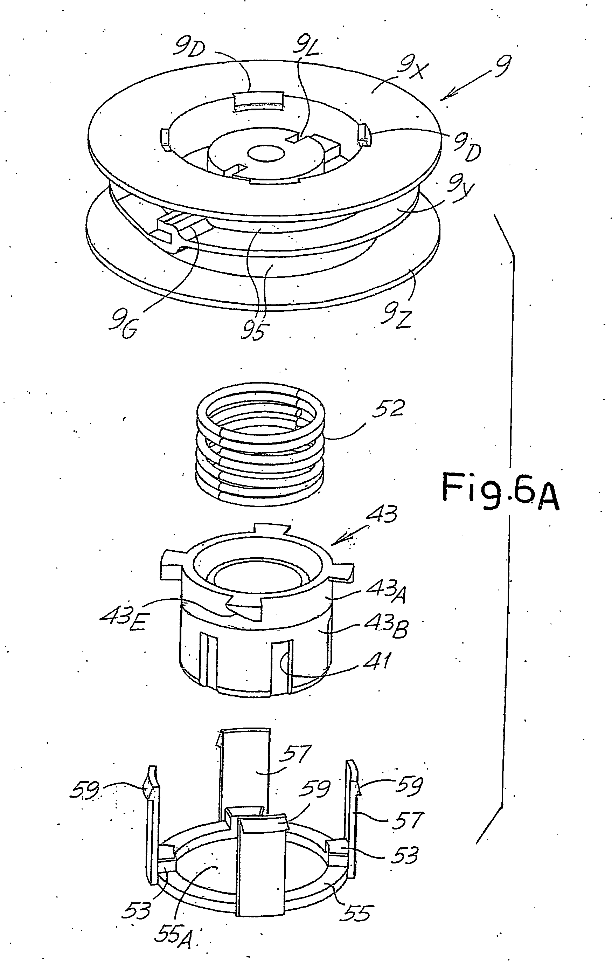

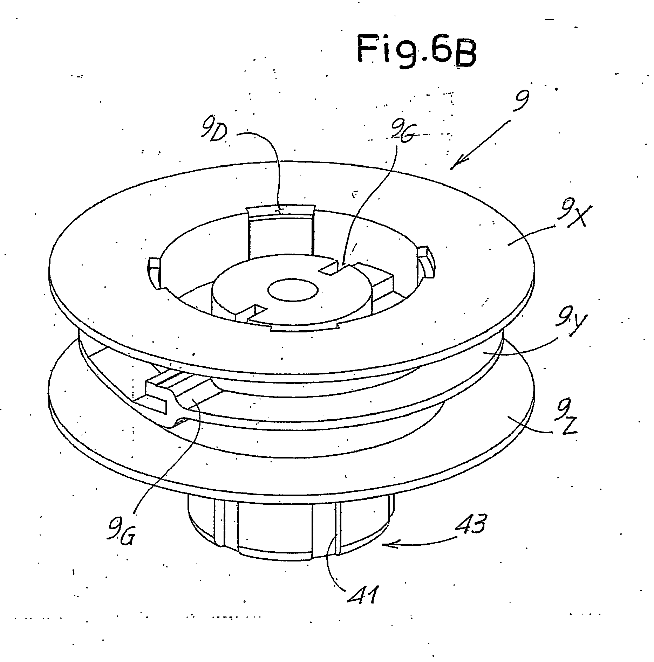

A first embodiment of the head according to the invention is shown in Figs 1 to 6B. The head, indicated as a whole at 1, comprises a housing formed of a first portion 3, lower in the example shown, and a second upper portion 5. The portion 3 defines a seat 7, the portion 5 of which forms the closing cover. A spool 9, on which a cutting line F is wound, can be inserted inside the housing formed of the portions 3 and 5. The cutting line can be single or multiple. For example, two separate cutting lines can be wound in two annular seats into which the spool 9 is divided. The structure of the spool 9 will be described in greater detail with reference to Figs 6A and 6B.

According to an advantageous embodiment, the lower portion 3 of the housing containing the spool 9 has an approximately cylindrical wall 11, fitted to the outside of which are protective tabs 13, the purpose of which is to protect the cutting line from breakages. The tabs 13 preferably extend in an arc of spiral and consequently have a gradually increasing radial dimension from a point 13A of connection to the outer surface of the cylindrical wall 11 to a substantially radial edge 13B, at which the tab 13 presents the maximum radial dimension and which is adjacent to a respective bushing 15, inserted in a through hole in the wall 11 and through which the cutting line passes.

According to a possible embodiment, elastic tabs 17 are provided along the cylindrical wall 11; these are obtained by cuts 17A parallel to the axis of rotation of the head 1. Each elastic tab 17 has a projection 17B projecting toward the outside of the wall 11 approximately at the upper edge 11A of said wall. Each projection 17B presents a chamfer 17C for the purposes described below.

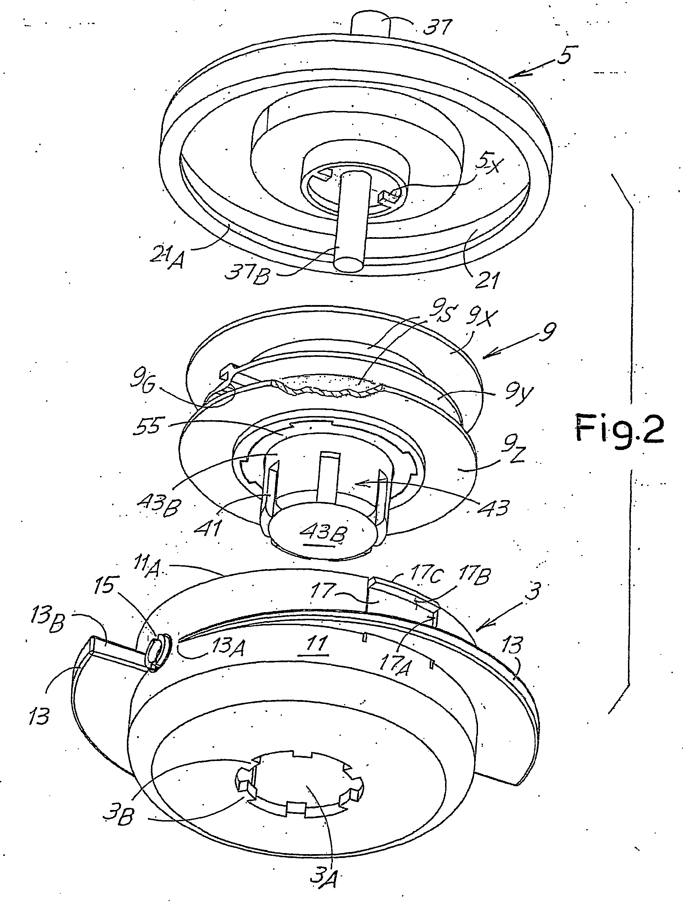

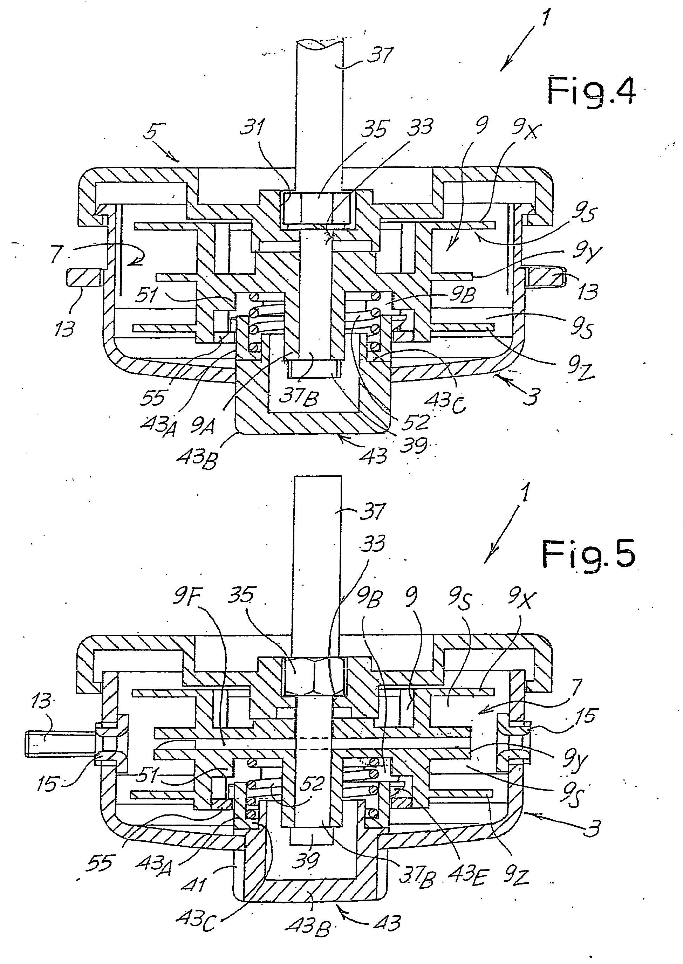

According to a possible embodiment, as can be seen in particular in Fig. 2, the portion 5 of the housing of the spool 9 has a substantially cylindrical wall 21 which, in the assembled arrangement (Figs 4 and 5), is arranged on the outside of the cylindrical wall 11 embracing and surrounding this wall in proximity of the upper edge 11A thereof. Extending along the cylindrical wall 21 is an annular projection 21A oriented radially inwardly, which forms a continuous annular undercut with which the elastic tabs 17 engage when the portions 3 and 5 of the housing of the spool 9 are assembled one on top of the other. The chamfer 17C of the elastic tabs 17 facilitates deformation of the tabs 17 toward the inside and consequently snap-engagement of the projections 17B behind the continuous annular projection 21A. To release the portion 3 from the portion 5 it is sufficient to press on the outside of the tabs 17 to cause them to bend inward and consequently release the projections or teeth 17B from the annular edge 21A.

With the arrangement described above the portions 3 and 5 can be snap engaged reciprocally due to the elastic tabs 17, without these having to be in a predetermined angular position with respect to the cover portion 5. On the contrary: once they have been snap assembled, the two portions 3 and 5 can rotate with respect to each other by any angle, even greater than 360°, as the annular edge 21A defines a continuous undercut projection on which the elastic tabs 17 engage. As will be explained below, this angular mobility allows the cutting line to be wound or unwound with respect to the spool 9 arranged in the seat 7 obtained inside the portion 3 of the housing.

An axial seat 31 with a non-circular cross-section, for example hexagonal in the embodiment shown, is provided in the portion 5 of the housing of the spool 9. A prismatic shaped body 35, for example hexagonal or anyway with a cross section corresponding to that of the seat 31, engages torsionally in this seat, the bottom of which has a circular hole 33. The body 35 is integral with a spindle 37 for coupling the head 1 to the rotating hub of a brush cutter or other machine. The spindle 37 has a lower portion 37B which extends through an axial hole of a hub 9A of the spool 9. The spool can be axially fastened on the spindle 37, 37A, for example through a screw member 39 or in another suitable manner.

According to a possible embodiment, the lower portion 3 of the housing of the spool 9 has a through hole 3A (Fig. 2) with a non-circular cross section. According to an advantageous embodiment the hole 3A can include a toothing 3B which engages in grooves 41 provided in a slider 43 housed in a sliding manner in a sliding seat formed in the spool 9.

More in particular, and with particular reference to Figs 4, 5, 6A and 6B, according to an advantageous embodiment the slider 43 is formed of a first innermost component 43A and a second outermost component 43B. The innermost component 43A has a substantially cylindrical shape shown in particular in the exploded view in Figs 6A and 6B. Said component 43A has a bottom wall 43C with a non-circular through hole (Figs. 4, 5). According to an advantageous embodiment the hole in the bottom wall 43C has a grooved profile that allows torsional coupling to the second component 43B of the slider 43, which has a complementary grooved profile. In this manner, by inserting the component 43B with the upper part thereof in the hole of the wall 43C of the component 43A, a torsional coupling between the two components 43A, 43B is obtained.

The component 43A of the slider 43 has a toothing 43E (Fig. 6A) formed of chamfered teeth provided along the upper edge of the component 43A. The toothing 43E cooperates with a double series of teeth provided in the body of the spool 9 and, more precisely, in an axial seat 9B (Figs. 4, 5) housing the slider 43, and more precisely the component 43A thereof. More in particular, a first series of teeth 51 is provided inside the axial seat 9B, in the bottom thereof. Vice-versa, a second series of teeth 53 (see in particular Fig. 6A) is provided on an annular member 55, frontally closing the seat 9B to hold the component 43A of the slider 43 therein. The component 43A of the slider is held in the seat 9B due to the fact that the radial dimension of the toothing 43E is greater than the diameter of the hole 55A of the annular member 55. This member is provided with elastic projections 57 extending parallel to the axis of the head. In the example shown, the elastic projections are four in number, but this number can vary. Each elastic projection 57 has a tooth 59 at the end opposite to the end at which the elastic tabs 57 are constrained to the annular member 55. The teeth 59 snap engage in notches 9D of the spool 9 (see in particular Fig. 6A).

The slider 43 is pushed to project from the sliding seat 9B produced in the spool 9 by a compression spring 52 (see in particular figures 4 and 5), which reacts between the bottom of the seat 9B and the bottom wall 43C of the component 43A of the slider 43.

In an advantageous embodiment the spool 9 comprises two annular seats 9S defined by flanges 9X, 9Y and 9Z arranged in sequence along the axial extension of the spool 9.

Moreover, according to an advantageous embodiment, a through hole 9F is formed along a diameter of the spool (Fig. 5). By diametrically perforating the portion 37B of the spindle 37 at the diametrical hole 9F of the spool 9, a cutting line can be inserted through the hole 9F and the hole of the spindle 37B, making it project by approximately the same length from both sides of the hole 9F. By positioning the spool 9 in an angular position so that the inlets of the diametrical hole 9F are located in front of the holes of the guide bushings 15, as shown in the arrangement in Fig. 5, it is possible to insert an adequate length of cutting line through the bushings and the spool, fastening this line to the spool by feeding it along the diameter coinciding with the hole 9F. In this way, without opening the head it is possible then to wind the line on the spool 9 by rotating the latter in the manner described below.

If there is no diametrical hole in the portion 37B of the spindle 37, the cutting line, which in this case will be constituted by two sections of line, can still be fastened to the spool with the inner ends of these sections fastened in one and in the other portion of the diametrical hole 9F. Each section is inserted with the respective end through one or the other of the bushings 15.

To correctly position the spool 9 angularly with respect to the head, so that the opposite inlets of the hole 9F are located in front of the bushings 15, according to an advantageous embodiment two projections 5X can be provided in the portion 5 (Fig. 2) and two corresponding grooves 9L can be provided in the spool (Figs. 6A, 6B), in which the projections 5X are inserted. In this way, besides an angular reference for correct positioning of the spool with respect to the head, torsional coupling between the portions 3, 5 forming the housing and the spool 9 is also obtained.

In proximity of the diametrical hole 9F the central flange 9Y of the spool is shaped as shown in 9G in Figs. 1, 2, 6A and 6B, with a shaping that urges the line to be wound with the portions projecting from one and from the other part of the spool in the two seats 9S defined by the flanges 9X, 9Y and 9Z.

The head described above allows the portions 3 and 5 forming the housing of the spool 9 to be coupled by means of a simple and inexpensive elastic coupling system, with a configuration that allows rotation of the two portions with respect to each other and consequently loading of the cutting line from the outside without opening the head and winding thereof around the spool 9, as well as gradual unwinding of the line when it becomes worn.

In fact, for example starting from the assembled arrangement shown in Figs. 4 and 5, as mentioned above a portion of adequate length of the cutting line can be inserted through the guide bushings 15 inside the diametrical hole 9F and an adequate length of this line, for example 2 meters, can be made to project from each side. The lower portion 3 can then be rotated in one direction with respect to the upper portion 5 of the housing of the spool 9 due to the chamfered shape of the teeth 43E integral with the slider 43 housed axially in the spool 9. In fact, these teeth, being pushed by the torque exerted on the portion 3 of the housing against the teeth 53 integral with the spool, as a result of the chamfer of the same teeth 43E, push the slider 43, or more precisely the component 43A of this slider, axially, against the force of the compression spring 52, inside the axial seat 9B of the spool 9, thus allowing the teeth 43 to overtake the teeth 53 and therefore gradual winding of the line. This line is arranged with one of the two sections projecting from the diametrical hole 9F in one of the annular seats 9S forming turns therewithin, while the other section, projecting from the opposite side of the diametrical hole 9F, is wound in a spiral in the other of the two seats 9S of the spool 9.

Winding continues until a section of line of adequate length to cut the vegetation, for example 10-30 cm, is projecting on both parts from the head, and more precisely from the guide bushings 15 thereof.

The head can be rotated to cut the vegetation with the lines projecting therefrom. During this rotation the various components of the head are torsionally constrained to one another. In fact, the spindle 37 that receives motion from the drive hub of the brush cutter to which the head 1 is fitted, is torsionally coupled through the hexagonal profile (or with another non-circular cross section) of the body 35 to the upper portion 5 of the housing of the spool 9. The portion 5 is torsionally coupled to the spool 9 by means of the projections 5X engaged in the grooves 9G. The slider 43 is constrained through the teeth 43E thereof to the teeth 53 made integral with the annular member 55, in turn made integral with the spool 9. In this manner the spool 9 and the slider 43 rotate integrally with each other. The components 43A, 43B of the slider 43 are constrained torsionally by means of the grooved profile of the bottom wall 43C of the component 43A of the slider and the corresponding grooved profile of the upper portion of the component 43B, which is inserted in the hole of the bottom wall 43C. Coupling defined by the grooves 41 in the component 43B and by the grooved profile 3B produced in the hole 3A of the bottom wall of the lower portion 3 torsionally couples the latter to the slider 43 and consequently to the spool 9.

To lengthen the cutting line which becomes worn and breaks during use, it is sufficient to press the head against the ground to cause the slider 43 to thrust toward the inside against the action of the compression spring 52. The axial movement of the slider 43 toward the inside releases the teeth 43E from the teeth 53 integral with the spool, and the axial travel of the slider 43 continues to take the teeth 43E to the height of the teeth 51. As the teeth 51 and 53 are offset both angularly and axially, with each movement of the slider in one or the other direction the spool 9 rotates with respect to the housing 3, 5 thereof, as a result of centrifugal stress on the lines projecting from the head. For each movement of the slider,43 a rotation equal to the angular offset between the teeth 51 and the teeth 53 occurs. By pressing the slider 43 repeatedly against the ground, the cutting line or more precisely both ends of the cutting line wound in the spool 9 are gradually lengthened.

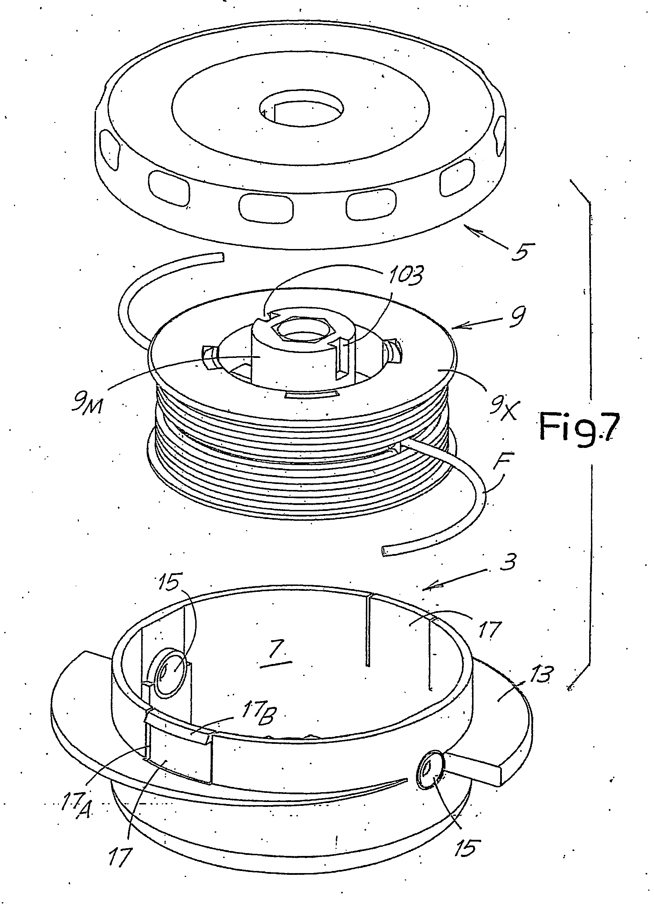

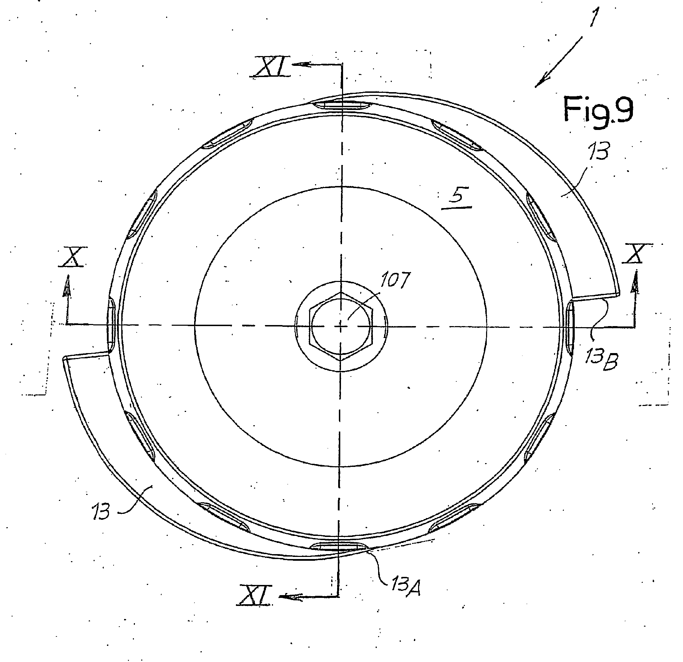

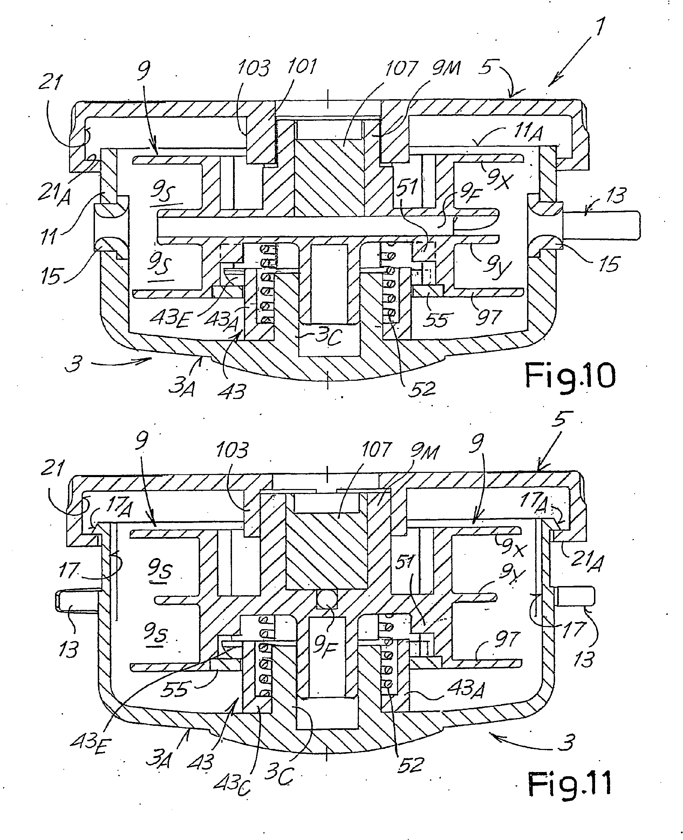

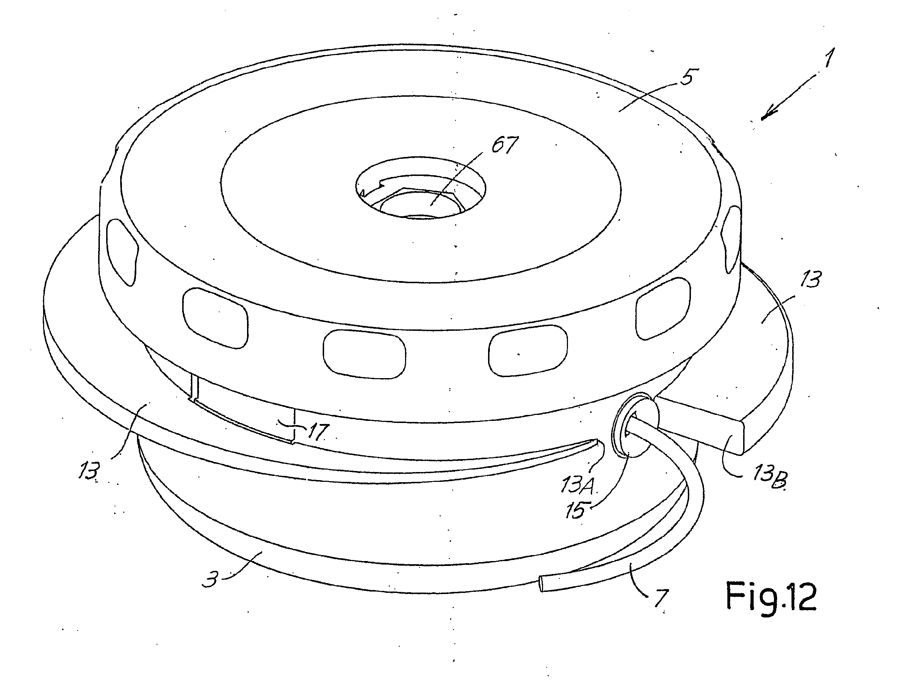

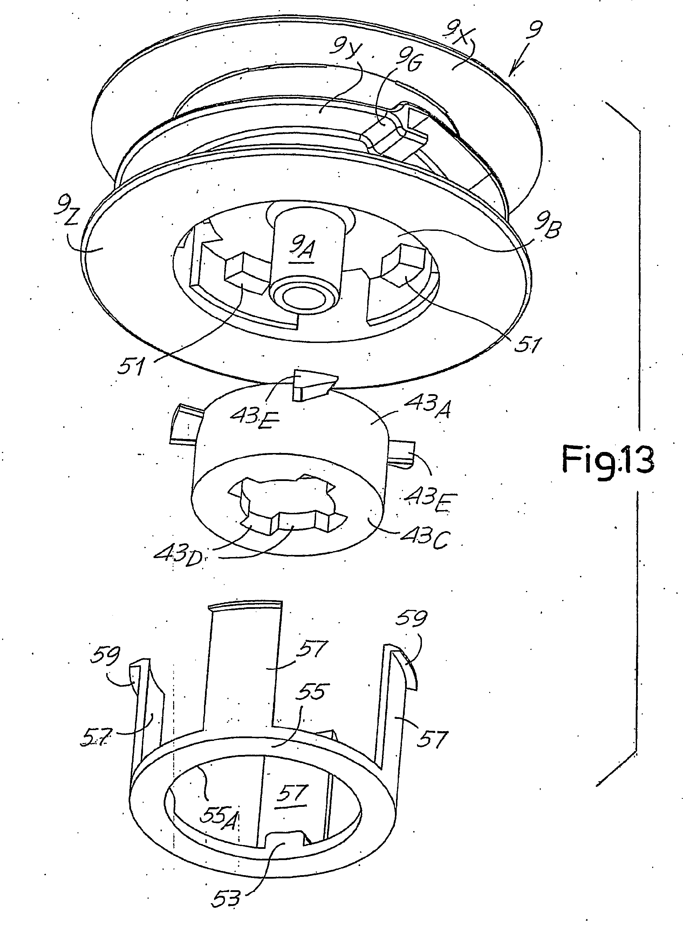

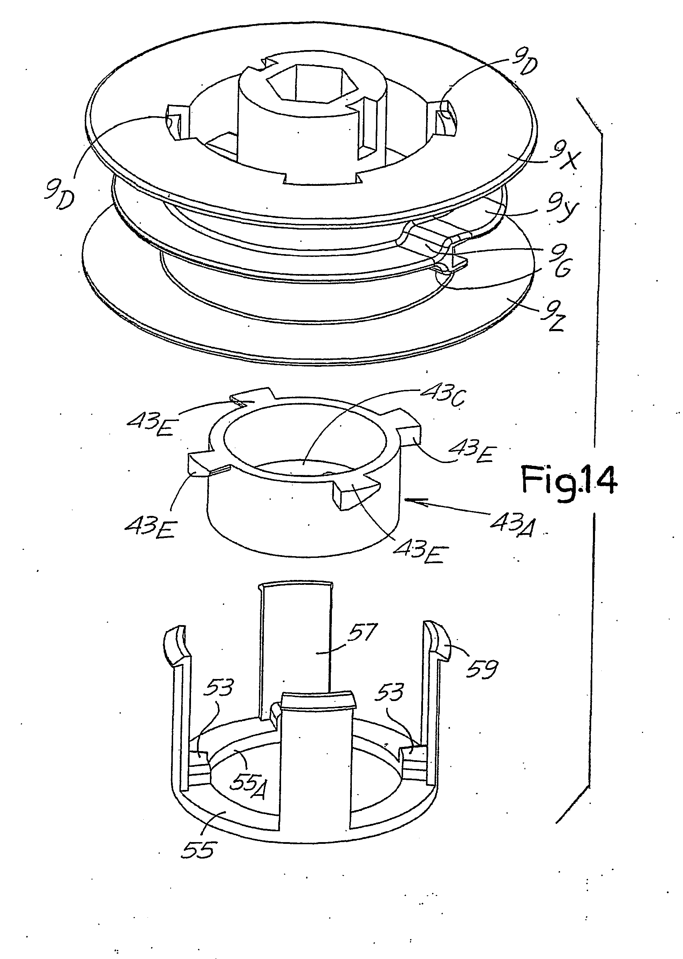

Figs. 7 to 14 show a modified embodiment of a head according to the invention. The same numerals indicate the same parts as, or equivalent to, those in the previous embodiment shown in Figs. 1 to 6B.

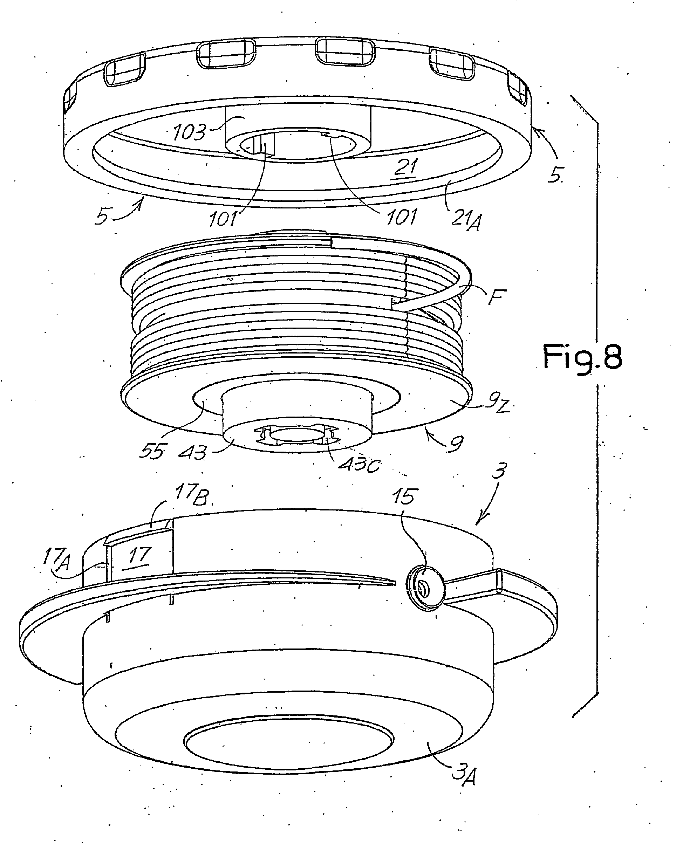

In this second embodiment the spool is torsionally engaged with the upper portion 5 of the housing of the spool 9 itself by means of two projections 101 provided inside a cylindrical seat 103 (Fig. 8) of the portion 5 of the head, and these projections 101 engage in grooves 103 provided in a hub 9M of the spool 9 (see in particular fig. 7).

An insert 107, advantageously made of metal, with a hexagonal section, or of another shape suitable to couple torsionally to the hub 9M of the spool 9, is inserted and fastened inside the hub 9M of the spool 9. The insert 107 can be suitably designed to form a coupling to the rotating shaft or rotating hub of the brush cutter to which the head 1 is to be fitted. For this purpose, it can have a threaded hole, a threaded rod (not shown) or any other mechanical coupling to the hub of the machine on which the head is mounted.

Unlike the embodiment shown in Figs. 1 to 6B, in the embodiment in Figs. 7 to 14 the slider 43 only comprises the component 43A and not the component 43B.

Moreover, the lower portion 3 of the housing of the spool is not perforated, but presents a solid lower wall 3A from which a shank 3C extends toward the inside, with a cross section corresponding to the cross section of the hole of the wall 43C of the component 43A of the slider 43, i.e. a profile with grooves corresponding to the toothed profile 43D. Torsional coupling is thus obtained between the lower portion 3 of the housing 9 of the slider and the slider itself, which is in turn coupled torsionally, in the manner already described above, to the spool 9 by means of the toothings 43E cooperating with the two series of axially and angularly offset teeth 51 and 53 integral with the spool 9, as already described above.

Therefore, in this case lengthening of the cutting line is obtained by moving the portions 3 and 5 of the housing, in which the slider 9 is located, axially with respect to each other. For this purpose the cylindrical wall 21 of the upper portion 5 is sufficiently high to allow travel of the lower portion between the annular projection 21A and the upper wall of the portion 3.

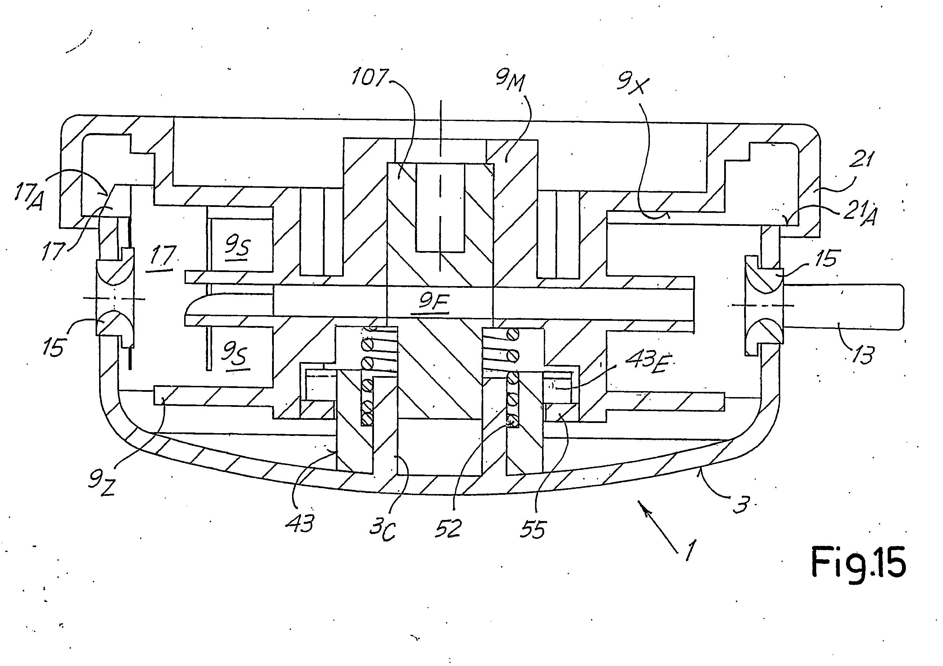

In the embodiments described above the head substantially comprises three main components, i.e. the two portions 3, 5 forming the housing of the cutting line (F) and a spool 9, on which the cutting line is wound. However, it would also be possible to design the head with a smaller number of parts or components, for example by making one of the portions of the housing of the cutting line integral or in one piece with the spool. Figure 15 shows an embodiment of this type. The same numerals indicate the same or equivalent parts to those in the previous embodiments.

In the embodiment in Fig. 15 the portion 5 of the housing of the spool does not exist as a separate piece. It is replaced by the flange 9X of the spool 9, which has a suitable shape. In particular, the flange 9X of the spool extends radially to form the closing cover of the housing in which the cutting line or the remaining part of the spool 9 is located. This flange also presents a substantially cylindrical wall 21, equivalent in function to the wall 21 of the previous embodiments. The wall 21 presents an annular projection 21A facing toward the inside, to form a continuous undercut in which the elastic tabs 17, integral with the portion 3 of the housing, can engage.

The embodiment of Fig. 15 therefore presents a lower number of components, although this makes the mold more difficult to design and manufacture. To simplify molding operations, in a possible embodiment the annular edge 21A could be manufactured separately and then, for example, ultrasonically welded or glued to the wall 21.

It is understood that the drawing only shows an example provided by way of a practical arrangement of the invention, which can vary in forms, and arrangement without however departing from the scope of the claims. Any reference numerals in the appended claims are provided to facilitate reading of the claims with reference to the description and to the drawing, and do not limit the scope of protection represented by the claims.

## Claims

1. A grass cutting head with a spool (9) for a cutting line and a housing for the cutting line (F), wherein said housing comprises a first portion (3) and a second portion (5, 9x) coupled reversibly to each other through a snap coupling (17-21), said first portion (3) having bushings (15) through which the cutting line (F) passes; **characterized in that** said snap coupling (17, 21) is designed to allow at least a reciprocal unlimited angular movement between said first portion (3) and said second portion (5, 9x) of the housing about the axis of rotation of the grass cutting head, said angular mobility allowing the cutting line (F) to be wound on or unwound from said spool (9).

2. Grass cutting head as claimed in claim 1, **characterized in that** said spool (9) is housed in the housing formed by said first portion (3) and said second portion (5).

3. Grass cutting head as claimed in claim 1, **characterized in that** one (9x) of said first (3) and second (9x) portions is integral with the spool (9).

4. Grass cutting head as claimed in claim 3, **characterized in that** said portion (9x) and said spool (9) integral with each other are produced in a single molded piece.

5. Grass cutting head as claimed in one or more of the preceding claims, **characterized in that** said snap coupling (17 - 21) is designed to allow a reciprocal axial movement between said first (3) and second portions (5, 9x) of the housing.

6. Grass cutting head as claimed in one or more of the preceding claims, **characterized in that** said snap coupling (17-21) comprises on a first portion (3) of the housing elastic tabs (17) engaging in undercuts (21A) of the second portion (5).

7. Grass cutting head as claimed in one or more of the preceding claims, **characterized in that** one (3) of said portions (3, 5, 9x) of the housing is torsionally coupled to a spool rotation mechanism.

8. Grass cutting head as claimed in claim 7, **characterized in that** said portion (3) of the housing torsionally coupled to the spool rotation mechanism is also axially coupled to said mechanism.

9. Grass cutting head as claimed in one or more of the preceding claims, **characterized in that** said first (3) and said second portions (5, 9x) of the housing are couplable to each other in any reciprocal angular position.

10. Grass cutting head as claimed in one or more of the preceding claims, **characterized in that** one (3) of said portions (3, 5, 9x) comprises an annular projection (21A) with which elastic tabs (17) of the other (3) of said portions (3, 5, 9x) snap engage.

11. Grass cutting head as claimed in claim 10, **characterized in that** said annular projection (21A) is provided on the inner surface of a first circumferential wall (21) of the respective portion (5, 9x) of the housing.

12. Grass cutting head as claimed in claim 11, **characterized in that** in the assembled arrangement said first circumferential wall (21), on which said projection (21A) is provided, extends around a second circumferential wall (11) of the other portion (3) of the grass cutting head and on the outside thereof, said elastic tabs (17) being provided along said second circumferential wall (11).

13. Grass cutting head as claimed in claim 11 or 12, **characterized in that** said first circumferential wall (21) has a dimension, in the direction of the axis of the grass cutting head, that allows reciprocal axial sliding between said first (3) and said second portion (5).

14. Grass cutting head as claimed in one or more of the preceding claims, **characterized in that** said first portion (3) forms a seat (7) for the spool (9) and said second portion (5) forms a cover of said seat (7).

15. Grass cutting head as claimed in one or more of the preceding claims, **characterized in that** said spool (9) has an axial seat (9B) in which a slider (43) is housed, elastically stressed toward a position in which it projects from said seat (9B); said slider (43) acting on members of the spool (9) which allow a stepped rotation of the slider (43) with respect to the spool (9).

16. Grass cutting head as claimed in one or more of the preceding claims, **characterized in that** said spool (9) comprises at least one radial seat (9F) for fastening at least one cutting line (F), said radial seat (9F) preferably passing diametrically through said spool (9), to allow passage of a cutting line (F).

17. Grass cutting head as claimed in one or more of the preceding claims, **characterized in that** said snap coupling comprises elastic tabs (17) provided in a substantially cylindrical wall (11) of a first portion (3) of the housing, in which bushings (15) are arranged for passage of the cutting line (F), and **in that** said second portion (5) of the housing comprises a substantially cylindrical wall (21), which externally surrounds said substantially cylindrical wall (11) of the first portion (3) of the housing and from which an internal annular projection (21A) projects, with which said elastic tabs (17) cooperate.

18. Grass cutting head as claimed in claim 3 or 4, **characterized in that** said portion of the housing of the cutting line (F) integral with the spool (9) is constituted by a flange (9x) of said spool (9), said flange (9x) forming a substantially cylindrical outer wall (21) surrounding a corresponding second wall integral with the other of said two portions forming the housing, said cylindrical outer wall (21) presenting an annular projection (21A) forming an undercut with which said elastic tabs (17) constrained to said second wall cooperate.

## Patentansprüche

1. Grasschneidkopf mit einer Spule (9) für einen Schneidfaden und einem Gehäuse für den Schneidfaden (F), wobei das Gehäuse einen ersten Abschnitt (3) und einen zweiten Abschnitt (5, 9x) umfasst, die mittels einer Einschnappkopplung (17-21) lösbar miteinander verbunden sind, wobei der erste Abschnitt (3) Buchsen (15) aufweist, durch die der Schneidfaden (F) geführt wird; **dadurch gekennzeichnet, dass** die Einschnappkopplung (17, 21) dazu ausgebildet ist, dass sie mindestens eine reziproke unbeschränkte Winkelbewegung zwischen dem ersten Abschnitt (3) und dem zweiten Abschnitt (5, 9x) des Gehäuses um die Rotationsachse des Grasschneidkopfes ermöglicht, wobei diese Winkelbeweglichkeit ermöglicht, dass der Schneidfaden (F) um die Spule (9) oder von der Spule (9) gewickelt werden kann.

2. Grasschneidkopf gemäß Anspruch 1, **dadurch gekennzeichnet, dass** die Spule (9) im Gehäuse untergebracht ist, welches vom ersten Abschnitt (3) und vom zweiten Abschnitt (5) gebildet wird.

3. Grasschneidkopf gemäß Anspruch 1, **dadurch gekennzeichnet, dass** einer (9x) aus erstem (3) und zweiten (9x) Abschnitt in die Spule (9) integriert ausgeführt ist.

4. Grasschneidkopf gemäß Anspruch 3, **dadurch gekennzeichnet, dass** der Abschnitt (9x) und die Spule (9), die ineinander integriert sind, in einem Einzelformstück produziert sind.

5. Grasschneidkopf gemäß einem oder mehreren der vorangehenden Ansprüche, **dadurch gekennzeichnet, dass** die Einschnappkopplung (17-21) dazu ausgeführt ist, eine reziproke Achsbewegung zwischen dem ersten (3) und zweiten Abschnitt (5, 9x) des Gehäuses zu ermöglichen.

6. Grasschneidkopf gemäß einem oder mehreren der vorangehenden Ansprüche, **dadurch gekennzeichnet, dass** die Einschnappkopplung (17-21) auf einem ersten Abschnitt (3) des Gehäuses elastische Streifen (17) umfasst, die in Unterschnitte (21H) des zweiten Abschnitts (5) eingreifen.

7. Grasschneidkopf gemäß einem oder mehreren der vorangehenden Ansprüche, **dadurch gekennzeichnet, dass** einer (3) der Abschnitte (3, 5, 9x) des Gehäuses drehelastisch mit einem Spulenrotationsmechanismus gekoppelt ist.

8. Grasschneidkopf gemäß Anspruch 7, **dadurch gekennzeichnet, dass** der Abschnitt (3) des drehelastisch mit dem Spulenrotationsmechanismus gekoppelten Gehäuses ebenfalls axial mit dem Mechanismus gekoppelt ist.

9. Grasschneidkopf gemäß einem oder mehreren der vorangehenden Ansprüche, **dadurch gekennzeichnet, dass** der erste (3) und der zweite Abschnitt (5, 9x) des Gehäuses in jeder reziproken Winkelstellung miteinander gekoppelt werden können.

10. Grasschneidkopf gemäß einem oder mehreren der vorangehenden Ansprüche, **dadurch gekennzeichnet, dass** einer (3) der Abschnitte (3, 5, 9x) einen ringförmigen Vorsprung (21A) umfasst, mit dem die elastischen Streifen (17) des anderen (3) der Abschnitte (3, 5, 9x) eine Einschnappverbindung eingehen.

11. Grasschneidkopf gemäß Anspruch 10, **dadurch gekennzeichnet, dass** der ringförmige Vorsprung (21A) an der Innenfläche einer ersten außenumfänglichen Wand (21) des entsprechenden Abschnitts (5, 9x) des Gehäuses vorgesehen ist.

12. Grasschneidkopf gemäß Anspruch 11, **dadurch gekennzeichnet, dass** sich in der zusammengesetzten Anordnung die erste außenumfängliche Wand (21), auf der der Vorsprung (21A) vorgesehen ist, um eine zweite außenumfängliche Wand (11) des anderen Abschnitts (3) des Grasschneidkopfes und an der Außenseite desselben erstreckt, wobei die elastischen Streifen (17) entlang der zweiten außenumfänglichen Wand (11) vorgesehen sind.

13. Grasschneidkopf gemäß Anspruch 11 oder 12, **dadurch gekennzeichnet, dass** die erste außenumfängliche Wand (21) eine Dimension in Richtung der Achse des Grasschneidkopfes aufweist, welche ein reziprokes axiales Gleiten zwischen dem ersten (3) und dem zweiten Abschnitt (5) ermöglicht.

14. Grasschneidkopf gemäß einem oder mehreren der vorangehenden Ansprüche, **dadurch gekennzeichnet, dass** der erste Abschnitt (3) einen Sitz (7) für die Spule (9) bildet und der zweite Abschnitt (5) eine Abdeckung dieses Sitzes (7) bildet.

15. Grasschneidkopf gemäß einem oder mehreren der vorangehenden Ansprüche, **dadurch gekennzeichnet, dass** die Spule (9) einen axialen Sitz (9B) aufweist, in dem ein Schieber (43) untergebracht ist, der elastisch zu einer Position hin belastet ist, in der er vom Sitz (9B) vorragt; wobei der Schieber (43) auf die Elemente der Spule (9) wirkt, die eine Schrittrotation des Schiebers (43) mit Bezug auf die Spule (9) ermöglichen.

16. Grasschneidkopf gemäß einem oder mehreren der vorangehenden Ansprüche, **dadurch gekennzeichnet, dass** die Spule (9) mindestens einen radialen Sitz (9F) zum Befestigen mindestens eines Schneidfadens (F) umfasst, wobei der radiale Sitz (9F) vorzugsweise diametral durch die Spule (9) geführt wird, um den Durchgang eines Schneidfadens (F) zu ermöglichen.

17. Grasschneidkopf gemäß einem oder mehreren der vorangehenden Ansprüche, **dadurch gekennzeichnet, dass** die Einschnappkopplung elastische Streifen (17) umfasst, die in einer im wesentlichen zylindrischen Wand (11) eines ersten Abschnitts (3) des Gehäuses vorgesehen sind, in dem Buchsen (15) für die Durchführung des Schneidfadens (F) angeordnet sind, und dass der zweite Abschnitt (5) des Gehäuses eine im wesentlichen zylindrische Wand (21) umfasst, die die im wesentlichen zylindrische Wand (11) des ersten Abschnitts (3) des Gehäuses außen umfängt und von der ein innerer ringförmiger Vorsprung (21A) vorragt, mit dem die elastischen Streifen (17) zusammenwirken.

18. Grasschneidkopf gemäß Anspruch 3 oder 4, **dadurch gekennzeichnet, dass** der in die Spule (9) integrierte Abschnitt des Gehäuses des Schneidfadens (F) aus einem Flansch (9x) der Spule (9) konstituiert ist, wobei der Flansch (9x) eine im Wesentlichen zylindrische Außenwand (21) bildet, die eine entsprechende zweite Wand umschließt, welche in den anderen der beiden das Gehäuse bildenden Abschnitte integriert ist, wobei die zylindrische Außenwand (21) einen ringförmigen Vorsprung (21A) aufweist, der einen Unterschnitt bildet, mit dem die elastischen Streifen (17) zusammenwirken.

## Revendications

1. Tête de coupe d'herbe avec une bobine (9) pour une ligne de coupe et un logement pour la ligne de coupe (F), dans laquelle ledit logement comprend une première partie (3) et une deuxième partie (5, 9x) couplées de manière réversible l'une à l'autre au moyen d'un accouplement encliquetable (17-21), ladite première partie (3) ayant des bagues (15) à travers lesquelles la ligne de coupe (F) passe ; **caractérisée en ce que** ledit accouplement encliquetable (17, 21) est conçu pour permettre au moins un mouvement angulaire alternatif illimité entre ladite première partie (3) et ladite deuxième partie (5, 9x) du logement autour de l'axe de rotation de la tête de coupe d'herbe, ladite mobilité angulaire permettant à la ligne de coupe (F) d'être enroulée sur, ou déroulée de, ladite bobine (9).

2. Tête de coupe d'herbe selon la revendication 1, **caractérisée en ce que** ladite bobine (9) est logée dans le logement formé par ladite première partie (3) et ladite deuxième partie (5).

3. Tête de coupe d'herbe selon la revendication 1, **caractérisée en ce qu'**une (9x) parmi lesdites première (3) et deuxième (9x) parties est solidaire de la bobine (9).

4. Tête de coupe d'herbe selon la revendication 3, **caractérisée en ce que** ladite partie (9x) et ladite bobine (9) solidaire l'une de l'autre sont produites en une pièce moulée unique.

5. Tête de coupe d'herbe selon l'une ou plusieurs des revendications précédentes, **caractérisée en ce que** ledit accouplement encliquetable (17 - 21) est conçu pour permettre un mouvement axial alternatif entre lesdites première (3) et deuxième parties (5, 9x) du logement.

6. Tête de coupe d'herbe selon l'une ou plusieurs des revendications précédentes, **caractérisée en ce que** ledit accouplement encliquetable (17-21) comprend sur une première partie (3) du logement des languettes élastiques (17) venant en prise dans des contre-dépouilles (21A) de la deuxième partie (5).

7. Tête de coupe d'herbe selon l'une ou plusieurs des revendications précédentes, **caractérisée en ce qu'**une (3) desdites parties (3, 5, 9x) du logement est couplée en torsion à un mécanisme de rotation de bobine.

8. Tête de coupe d'herbe selon la revendication 7, **caractérisé en ce que** ladite partie (3) du logement couplée en torsion au mécanisme de rotation de bobine est également couplée en sens axial audit mécanisme.

9. Tête de coupe d'herbe selon l'une ou plusieurs des revendications précédentes, **caractérisée en ce que** ladite première (3) et ladite deuxième parties (5, 9x) du logement peuvent être couplées l'une à l'autre dans n'importe quelle position angulaire alternative.

10. Tête de coupe d'herbe selon l'une ou plusieurs des revendications précédentes, **caractérisée en ce qu'**une (3) desdites parties (3, 5, 9x) comprend une partie saillante annulaire (21A) avec laquelle les languettes élastiques (17) de l'autre (3) desdites parties (3, 5, 9x) s'emboîtent.

11. Tête de coupe d'herbe selon la revendication 10, **caractérisée en ce que** ladite partie saillante annulaire (21A) est fournie sur la surface interne d'une première paroi circonférentielle (21) de la partie respective (5, 9x) du logement.

12. Tête de coupe d'herbe selon la revendication 11, **caractérisée en ce que** dans l'agencement assemblé, ladite première paroi circonférentielle (21), sur laquelle ladite partie saillante (21 A) est fournie, s'étend autour d'une deuxième paroi circonférentielle (11) de l'autre partie (3) de la tête de coupe d'herbe et sur l'extérieur de celle-ci, lesdites languettes élastiques (17) étant fournie le long de ladite deuxième paroi circonférentielle (11).

13. Tête de coupe d'herbe selon la revendication 11 ou 12, **caractérisée en ce que** ladite première paroi circonférentielle (21) a une dimension, dans la direction de l'axe de la tête de coupe d'herbe, qui permet un coulissement axial alternatif entre ladite première (3) et ladite deuxième partie (5).

14. Tête de coupe d'herbe selon l'une ou plusieurs des revendications précédentes, **caractérisée en ce que** ladite première partie (3) forme une surface d'appui (7) pour la bobine (9) et ladite deuxième partie (5) forme un couvercle de ladite surface d'appui (7).

15. Tête de coupe d'herbe selon l'une ou plusieurs des revendications précédentes, **caractérisée en ce que** ladite bobine (9) a une surface d'appui axiale (9B) dans laquelle une glissière (43) est logée, contrainte élastiquement vers une position dans laquelle elle fait saillie à partir de ladite surface d'appui (9B) ; ladite glissière (43) agissant sur des membres de la bobine (9) qui permettent une rotation échelonnée de la glissière (43) par rapport à la bobine (9).

16. Tête de coupe d'herbe selon l'une ou plusieurs des revendications précédentes, **caractérisée en ce que** ladite bobine (9) comprend au moins une surface d'appui radiale (9F) destinée à fixer au moins une ligne de coupe (F), ladite surface d'appui radiale (9F) passant de préférence diamétralement à travers ladite bobine (9), pour permettre le conduit d'une ligne de coupe (F).

17. Tête de coupe d'herbe selon l'une ou plusieurs des revendications précédentes, **caractérisée en ce que** ledit accouplement encliquetable comprend des languettes élastiques (17) fournies dans une paroi essentiellement cylindrique (11) d'une première partie (3) du logement, dans laquelle des bagues (15) sont disposées pour un passage de la ligne de coupe (F), et **en ce que** ladite deuxième partie (5) du logement comprend une paroi essentiellement cylindrique (21), qui entoure à l'extérieur ladite paroi essentiellement cylindrique (11) de la première partie (3) du logement et à partir de laquelle une partie saillante annulaire interne (21A) fait saillie, avec laquelle lesdites languettes élastiques (17) coopèrent.

18. Tête de coupe d'herbe selon la revendication 3 ou 4, **caractérisée en ce que** ladite partie du logement de la ligne de coupe (F) solidaire de la bobine (9) est constituée d'un rebord (9x) de ladite bobine (9), ledit rebord (9x) formant une paroi externe sensiblement cylindrique (21) entourant une deuxième paroi correspondante solidaire de l'autre parmi lesdites deux parties formant le logement, ladite paroi externe cylindrique (21) présentant une partie saillante annulaire (21A) formant une contre-dépouille avec laquelle lesdites languettes élastiques (17) contraintes à ladite deuxième paroi coopèrent.
